Europäisches Patentamt

European Patent Office

Office européen des brevets

(19)

(11) Numéro de publication: **0 317 419**
**B1**

(12) FASCICULE DE BREVET EUROPEEN

(45) Date de publication du fascicule du brevet:
05.09.90

(51) Int. Cl.⁵: **B60J 1/17, B60R 13/06**

(21) Numéro de dépôt: 88402859.8

(22) Date de dépôt: 15.11.88

(54) Montage des vitres mobiles des portes de véhicules automobiles.

(30) Priorité: 19.11.87 FR 8716370

(43) Date de publication de la demande:
24.05.89 Bulletin 89/21

(45) Mention de la délivrance du brevet:
05.09.90 Bulletin 90/36

(84) Etats contractants désignés:
DE GB IT

(56) Documents cités:
EP-A- 0 040 587
FR-A- 2 555 241

(73) Titulaire: AUTOMOBILES PEUGEOT, 75, avenue de la
Grande Armée, F-75116 Paris(FR)
Titulaire: AUTOMOBILES CITROEN, 62 Boulevard
Victor-Hugo, F-92200 Neuilly-sur-Seine(FR)

(72) Inventeur: Michel, Louis, 7, Boulevard de Provence,
F-91200 Athis-Mons(FR)

(74) Mandataire: Boivin, Claude, 9, rue Edouard-Charton,
F-78000 Versailles(FR)

# Description

La présente invention a pour objet un montage des vitres mobiles le long de cadres métalliques formant les ossatures des portes de véhicules automobiles (du type divulgué, par exemple, dans FR-A 2 555 241), qui permet de supprimer l'apparence extérieure des montants de porte pour donner l'illusion d'une surface vitrée faisant le tour du véhicule.

Selon l'invention, la vitre est guidée par un cadre en matière plastique fixé de préférence par collage sur un cadre métallique formant l'ossature de la porte et disposé derrière la vitre, la zone de guidage du cadre en matière plastique étant déportée latéralement vers l'extérieur du cadre métallique.

On a décrit ci-après, à titre d'exemple non limitatif, un mode de réalisation du montage selon l'invention, avec référence aux dessins annexés dans lesquels :

La Figure 1 est une vue en élévation de l'un des côtés du véhicule;

Les Figures 2 à 4 sont des vues en coupe respectivement suivant II-II, III-III et IV-IV de la Figure 1;

La Figure 5 est une vue en perspective de la partie inférieure du cadre de porte avant;

Les Figures 6 et 7 sont des vues en coupe respectivement suivant VI-VI et VII-VII de la Figure 1;

La Figure 8 est une vue en perspective du coin supérieur avant de la porte arrière.

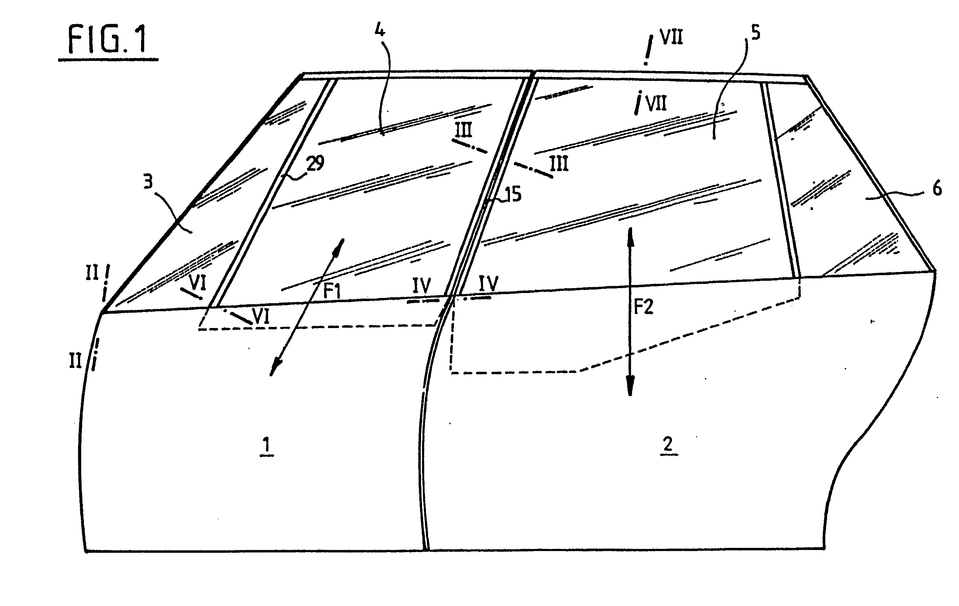

A la Figure 1, on voit un côté du véhicule avec une porte latérale avant 1 et arrière 2. La porte avant 1 présente une vitre fixe 3 et une vitre 4 mobile dans la direction de la flèche $f_1$; de son côté, la porte arrière 2 présente une vitre 5 mobile dans la direction de la flèche $f_2$ et une vitre fixe 6.

La porte avant 1 est constituée par un cadre 7 en matière plastique collé sur un cadre métallique 8 disposé derrière les vitres 3 et 4; le cadre 7 assure le guidage de la vitre 4, la zone de guidage de ce cadre étant déportée latéralement vers l'extérieur du cadre 8. A sa partie inférieure, elle présente une doublure intérieure 9 et un panneau extérieur 10. De manière analogue, la porte arrière 2 est constituée par un cadre 11 en matière plastique collé sur un cadre métallique 12 et présente à sa partie inférieure une doublure intérieure 13 et un panneau extérieur 14. L'étanchéité entre les deux portes 1 et 2 est assurée par un joint 15 monté sur le cadre plastique 11 de la porte arrière. L'étanchéité des portes avec le pied milieu 16 est assurée par des joints 17 et 18 fixés sur le pied milieu et sur lesquels appuient les cadres métalliques 8 et 12. L'étanchéité des vitres descendantes 4 et 5 est assurée d'une part par des joints 19 et 20 fixés respectivement sur le cadre métallique 8 ou 12 et d'autre part par des joints 21 et 22 fixés respectivement à l'intérieur des cadres plastiques 7 et 11.

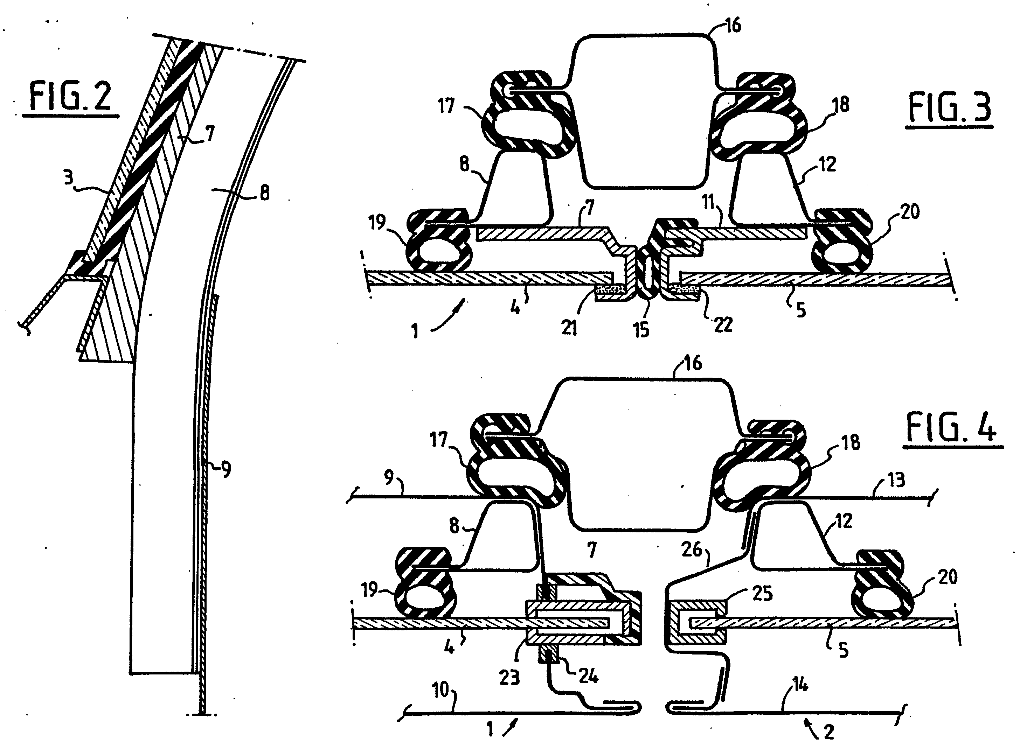

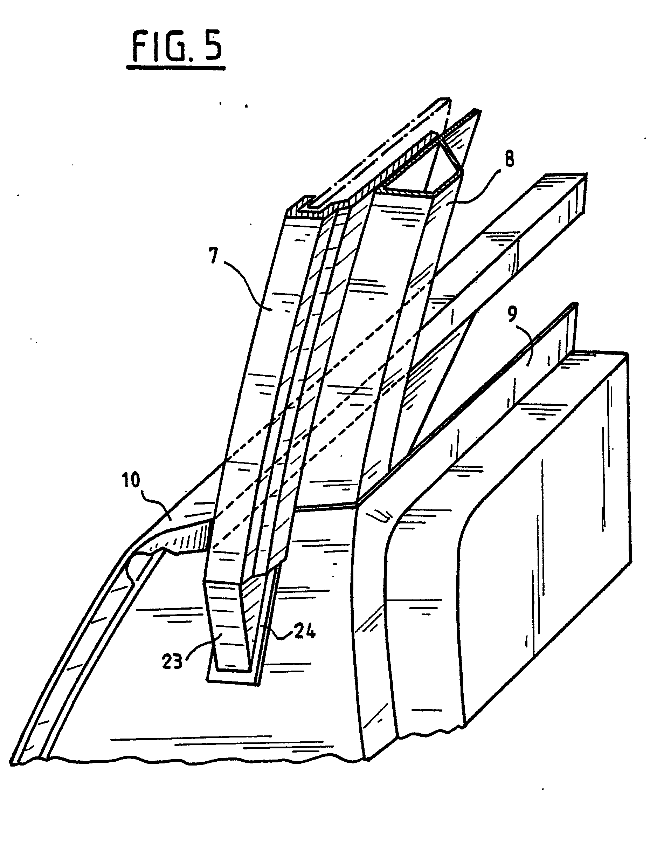

Comme on le voit aux Figures 4 et 5, la vitre 4 de la porte avant 1 est guidée dans sa partie basse par une coulisse 23 qui traverse la face latérale de la doublure de porte 9, avec interposition d'un joint 24, et qui est recouverte par le cadre plastique 7.

De son côté, la vitre 5 de la porte arrière 2 est guidée par une coulisse 25 qui est disposée dans un renfort 26 soudé sur le bord d'une ouverture prévue dans la doublure 13.

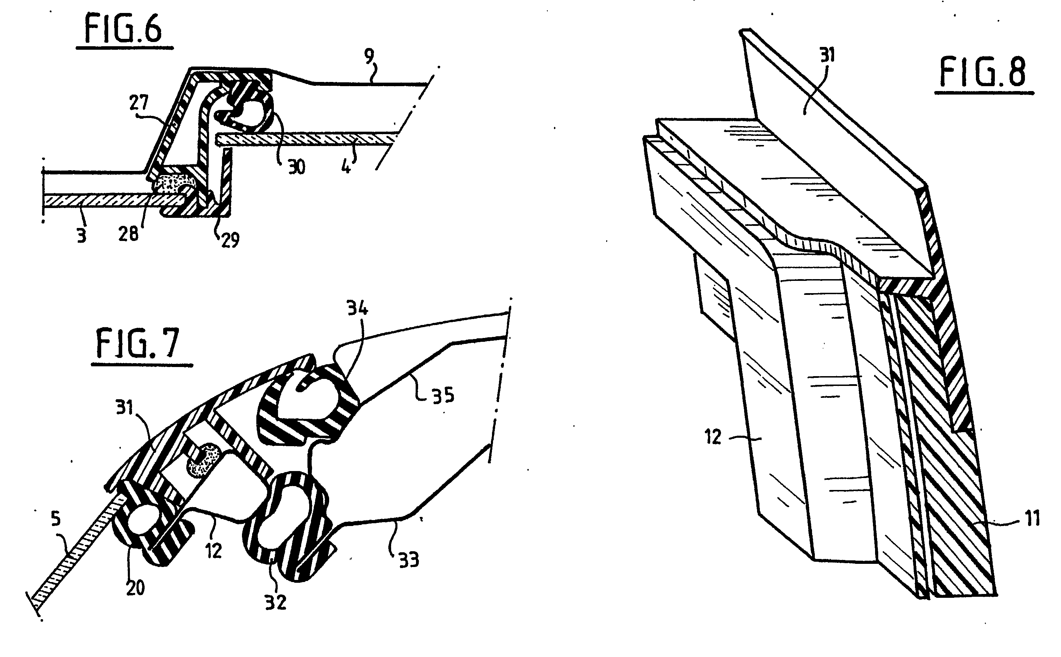

Le dormant de la porte avant 1 est constitué par un profilé en aluminium 27 fixé sur la doublure de porte 9 (Figure 6). L'étanchéité de la vitre fixe 3 est assurée par un joint 28 collé sur le profilé 27 et par un enjoliveur 29 en matière plastique clipsé sur le dormant 27. Celle de la vitre mobile 4 est assurée par un joint 30 clipsé sur le dormant. Le dormant de la porte arrière 2 est réalisé de manière analogue.

A la Figure 7, on voit un profilé en matière plastique 31 qui complète le cadre 11 de la porte arrière et est collé comme lui sur le cadre métallique 12, ainsi que le joint 20 qui assure l'étanchéité de la vitre mobile 5. L'étanchéité de la partie supérieure de la porte avec l'habitacle est assurée par un joint 32 fixé sur la feuillure d'entrée de porte 33. La gouttière de pavillon est constituée par un joint en forme de gouttière 34 fixé sur le pavillon 35.

On voit de la description qui précède et des dessins, en particulier de la Figure 3, que les vitres fixes et mobiles sont déportées vers l'extérieur par rapport à la structure de véhicule, ce qui diminue la résistance à l'air, et que les montants de porte ne sont pas visibles, ce qui donne l'illusion d'une surface vitrée faisant le tour du véhicule. Il n'y a pas de soudure extérieure, mais simplement collage d'un cadre en matière plastique sur un panneau de porte, ce qui évite tous les problèmes de corrosion.

## Revendications

1. Montage de la vitre mobile le long d'un cadre métallique ( 8 ou 12) formant l'ossature d'une porte de véhicule automobile, caractérisé en ce que la vitre (4 ou 5) est guidée par un cadre (7 ou 11) en matière plastique fixé de préférence par collage sur le cadre métallique (8 ou 12) disposé derrière la vitre, la zone de guidage du cadre en matière plastique étant déportée latéralement vers l'extérieur du cadre métallique (8 ou 12).

2. Montage selon la revendication 1, caractérisé en ce que le cadre métallique (8 ou 12) porte un joint d'étanchéité (19 ou 20) à son côté opposé à la zone de guidage du cadre en matière plastique.

3. Montage selon la revendication 1 ou 2, caractérisé en ce que la partie inférieure de la vitre (4 ou 5) est guidée par une coulisse (23 ou 25) qui traverse une doublure intérieure de porte (9 ou 13).

## Patentansprüche

1. Einbau der beweglichen Scheibe längs eines die Tragkonstruktion bildenden Metallrahmens (8 oder 12) einer Kraftfahrzeugtür, dadurch gekennzeichnet, daß die Scheibe (4 oder 5) an einem Rahmen (7 oder 11) aus Kunststoffmaterial geführt ist, der vorzugsweise durch Klebung an dem Metallrahmen (8 oder 12) befestigt ist, der hinter der Scheibe, angeordnet ist, wobei die Führungszone des Rahmens aus Kunststoffmaterial seitlich gegen die Außenseite des Metallrahmens (8 oder 12) versetzt angeordnet ist.

2. Einbau nach Anspruch 1, dadurch gekennzeichnet, daß der Metallrahmen (8 oder 12) an seiner der Führungszone des Rahmens aus Kunststoffmaterial gegenüberliegenden Seite eine Dichtungsleiste (19 oder 20) trägt.

3. Einbau nach Anspruch 1 oder 2, dadurch gekennzeichnet, daß das Unterteil der Scheibe (4 oder 5) in einer Gleitführung (23 oder 25) geführt ist, die eine innere Verkleidung (9 oder 13) der Tür durchdringt.

**Claims**

1. Assembly of the window, movable along a metal frame (8 or 12) forming the skeleton, of a motor vehicle door, characterized in that the window (4 or 5) is guided by a plastic material frame (7 or 11) fixed preferably by bonding to the metal frame (8 or 12) disposed behind the window, the guide zone for the plastic material frame being offset laterally outwardly of the metal frame (8 or 12).

2. Assembly according to claim 1, characterized in that the metal frame (8 or 12) has a seal (19 or 20) at its side opposite the guide zone for the plastic material frame.

3. Assembly according to claim 1 or 2, characterized in that the lower part of the window (4 or 5) is guided by a slide (23 or 25) which passes through a door inner lining (9 or 13).

FIG.1

EP 0 317 419 B1

FIG. 3

FIG. 4

FIG. 2

# FIG. 5

FIG.8

FIG.6

FIG.7